# EUROPEAN PATENT SPECIFICATION

(11) **EP 3 796 462 B1**
(45) Date of publication and mention of the grant of the patent: **26.04.2023**
(21) Application number: 20755693.7
(22) Date of filing: 13.02.2020
(51) Int. Cl.: H01M 10/653, H01M 10/613, H01M 50/507, H01M 10/655, H01M 50/211, H01M 10/625, H01M 50/207, H01M 50/209, H01M 10/658

(54) **BATTERY MODULE, MANUFACTURING METHOD THEREOF AND BATTERY PACK INCLUDING BATTERY MODULE**
BATTERIEMODUL, HERSTELLUNGSVERFAHREN DAFÜR UND BATTERIEPACK MIT EINEM BATTERIEMODUL
MODULE DE BATTERIE, SON PROCÉDÉ DE FABRICATION, ET BLOC-BATTERIE COMPRENANT UN MODULE DE BATTERIE

(30) Priority: 13.02.2019 KR 20190016864; 02.09.2019 KR 20190108423
(43) Date of publication of application: 24.03.2021
(73) Proprietor: LG Energy Solution, Ltd., Seoul 07335 (KR)
(72) Inventor: YOON, Jisu, Daejeon 34122 (KR); JU, Jae Hyeon, Daejeon 34122 (KR); KANG, Dahoon, Daejeon 34122 (KR); SEO, Kyoungho, Daejeon 34122 (KR)
(74) Representative: Plasseraud IP
(86) International application number: PCT/KR2020/002049
(87) International publication number: WO 2020/166998

(56) References cited:
- EP-A1- 3 264 492
- WO-A1-2017/110036
- KR-A- 20160 105 354
- KR-A- 20160 125 644
- KR-A- 20170 059 979
- KR-A- 20170 092 246
- KR-A- 20180 060 997
- US-A1- 2014 023 906

## Description

### [TECHNICAL FIELD]

### Cross Citation with Related Application(s)

This application claims the benefit of Korean Patent Application No. 10-2019-0016864 filed on February 13, 2019, Korean Patent Application No. 10-2019-0108423 filed on September 2, 2019, and Korean Patent Application No. 10-2020-0017528 filed on February 13, 2020 in the Korean Intellectual Property Office.

The present disclosure relates to a battery module, a manufacturing method thereof, and a battery pack including the battery module, and more particularly, to a battery module which maintains constantly a space in which a thermally conductive resin is injected, a manufacturing method thereof, and a battery pack including the battery module.

### [BACKGROUND ART]

Secondary batteries, which are easily applied to various product groups and has electrical characteristics such as high energy density, are universally applied not only for a portable device but also for an electric vehicle (EV) or a hybrid electric vehicle (HEV), an energy storage system or the like, which is driven by an electric driving source. The secondary battery is attracting attention as a new environment-friendly energy source for improving energy efficiency since it gives a primary advantage of remarkably reducing the use of fossil fuels and also does not generate byproducts from the use of energy at all.

In small-sized mobile devices, one or two to four battery cells are used per device, whereas medium- or large-sized devices such as automobiles require high output and large capacity. Therefore, a medium- or large-sized battery module in which a plurality of battery cells are electrically connected is used.

Since the medium- or large-sized battery module is preferably manufactured in a small size and weight, if possible, a prismatic battery, a pouch-type battery, etc., which can be stacked with a high degree of integration and have a small weight relative to capacity, are mainly used as a battery cell of the medium- or large-sized battery module.

EP 3 264 492 A1 discloses a battery module consisting of a module case forming an interior space and accommodating a battery cell stack in which a plurality of battery cells are stacked and a resin layer provided in the inner space of the module case. The resin layer is in contact with the several battery cells, lower plate or side wall.

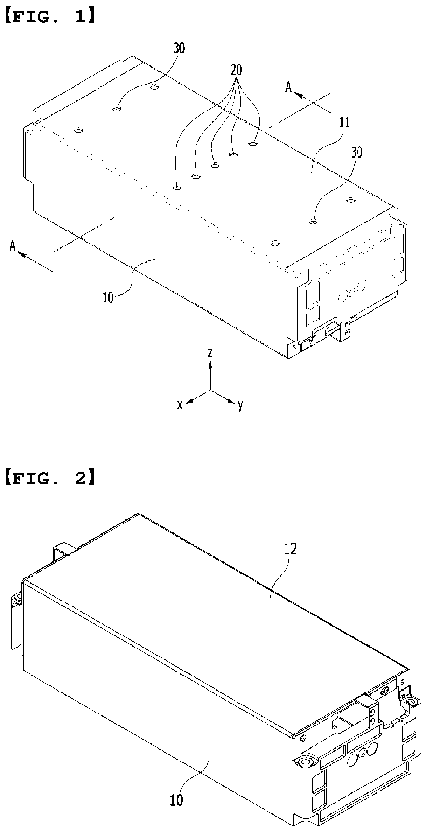

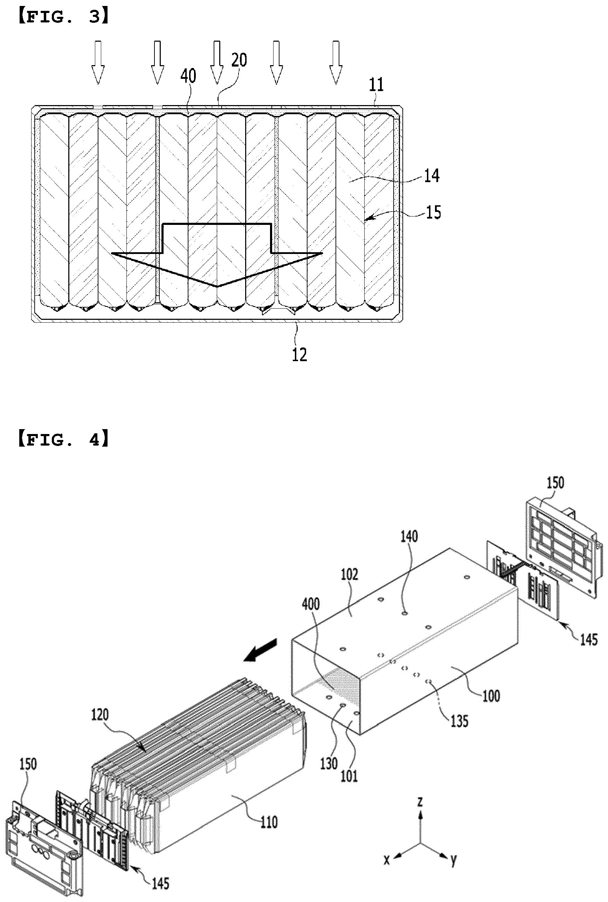

FIG. 1 is a perspective view showing a hole formed in a bottom portion of a frame in a conventional battery module. FIG. 2 is a perspective view showing a state in which the battery module of FIG. 1 is turned upside down. FIG. 3 is a cross-sectional view taken along line A-A of FIG. 1.

Referring to FIGS. 1 and 2, the battery module may include a frame member 10 which has front and rear surfaces opened and accommodates a battery cell stack in the inner space in order to protect the cell stack from external shock, heat or vibration. The frame member 10 has an upper portion 12 and a bottom portion 11. Referring to FIG. 2 showing a state in which the battery module of FIG. 1 is turned upside down, an injection hole 20 is formed in the bottom portion 11 of the frame member 10, and a thermally conductive resin may be injected between the battery cell stack and the frame member 10 through the injection hole 20 to form a thermally conductive resin layer.

The thermally conductive resin layer may serve to transfer heat generated from the battery cell stack to the outside of the battery module and to fix the battery cell stack in the battery module. A checking hole 30 is further formed in the bottom portion 11 of the frame member 10; and when the thermally conductive resin is injected, the thermally conductive resin injected more than a necessary amount may be discharged to the outside of the battery module through the checking hole 30, and the injected amount can be checked thereby.

FIG. 1 shows a state in which the battery module is turned over 180 degrees in order to inject a thermally conductive resin. In this case, components inside the battery module may move downward by gravity as shown in FIG. 3. A battery cell stack 15, which is an aggregate formed by stacking a plurality of battery cells 14, is mounted inside the battery module, and due to the movement of the battery cell stack 15 by gravity, a space capable of injecting the thermally conductive resin becomes wider than the space originally designed. In this case, the thermally conductive resin is injected, and the amount of the thermally conductive resin that fills a space between a bottom portion of the frame and the battery cell stack, may increase more than necessary.

### [DETAILED DESCRIPTION OF THE INVENTION]

### [TECHNICAL PROBLEM]

It is an object of the present disclosure to provide a battery module which maintains constantly a space in which a thermally conductive resin is injected, reduces the cost of the manufacturing process, and prevents an unnecessary increase in weight, a manufacturing method thereof, and a battery pack including the battery module.

However, the problem to be solved by the embodiments of the present disclosure is not limited to the above-described problems, and can be variously expanded within the scope of the technical idea included in the present disclosure.

### [TECHNICAL SOLUTION]

A battery module according to one embodiment of the present disclosure comprises a battery cell stack in which a plurality of battery cells are stacked, and a frame member accommodating the battery cell stack and having an upper surface and a lower surface corresponding to each other, wherein an injection hole for injecting a thermally conductive resin is formed in the lower surface of the frame member, and wherein an insertion hole through which a protrusion of a supporting jig passes is formed in the upper surface of the frame member.

The battery module may further include a thermally conductive resin layer positioned between the lower surface of the frame member and the battery cell stack.

The battery module may further include an insulating cover positioned between the upper surface of the frame member and the battery cell stack.

A separation space may be formed between the upper surface of the frame member and the insulating cover by a distance from a point where the protrusion of the supporting jig passes through the insertion hole to a surface supporting the battery cell stack.

A plurality of the insertion holes are formed, and the plurality of insertion holes may be formed at both ends along a central portion and a longitudinal direction of the upper surface of the frame member.

The battery module further includes a busbar frame covering front and rear surfaces of the frame member, and the frame member may surround upper, lower, left and right surfaces of the battery cell stack.

The upper and lower surfaces of the frame member may face each other along a direction perpendicular to a stacking direction of the battery cell stack.

A method of manufacturing a battery module according to another embodiment of the present disclosure comprises the steps of: accommodating a battery cell stack in which a plurality of battery cells are stacked in a frame member, mounting a supporting jig on an upper surface of the frame member, and injecting a thermally conductive resin through an injection hole formed in a lower surface of the frame member, wherein in the step of injecting the thermally conductive resin, the supporting jig supports a component inside the frame member so that the component does not flow.

The supporting jig may include at least one protrusion so as to be inserted into an insertion hole formed in an upper surface of the frame member.

The method of manufacturing a battery module may further include the step of disassembling the supporting jig from the frame member after the step of injecting the thermally conductive resin.

The step of injecting the thermally conductive resin through the injection hole formed in the lower surface of the frame member may be performed in a state in which the frame member is turned upside down, and the step of disassembling the supporting jig from the frame member may be performed in a state in which the frame member is again turned upside down to its original state.

The supporting jig may be formed of a plastic material.

The method of manufacturing a battery module may further include a step of forming an insulating cover between the upper surface of the frame member and the battery cell stack.

The component may include the battery cell stack and the insulating cover.

A battery pack according to another embodiment of the present disclosure includes the battery module described above.

### [ADVANTAGEOUS EFFECTS]

According to the embodiments, a jig is used to prevent components inside a battery module from moving down by gravity, and a hole is processed in an upper surface of the battery module, so that a projection formed in the jig is inserted into the hole on the upper surface of the battery module, whereby a space in which a thermally conductive resin is injected can be kept constant at all times.

In addition, a resin can be injected into the module by an appropriate amount to reduce the cost of a manufacturing process and to prevent an unnecessary increase in weight.

### [BRIEF DESCRIPTION OF THE DRAWINGS]

FIG. 1 is a perspective view showing a hole formed in a bottom portion of a frame in a conventional battery module.
FIG. 2 is a perspective view showing a state in which the battery module of FIG. 1 is turned upside down.
FIG. 3 is a cross-sectional view taken along line A-A of FIG. 1.
FIG. 4 is an exploded perspective view showing a battery module according to one embodiment of the present disclosure.
FIG. 5 is a view showing a state in which the battery module components of FIG. 4 are coupled.
FIG. 6 is a perspective view showing a state in which the battery module of FIG. 5 is turned upside down.
FIG. 7 is a cross-sectional view taken along line B-B of FIG. 6.
FIG. 8 is a view showing a state in which a jig according to the present embodiment is coupled to an upper end of the battery module.
FIG. 9 is a view showing a state before a supporting jig is coupled to the battery module in FIG. 8.
FIG. 10 is a view showing a state in which the battery module of FIG. 8 is turned upside down.
FIG. 11 is a view showing a state in which a supporting jig is separated in a cross-sectional view taken along line C-C of FIG. 10.
FIG. 12 is a cross-sectional view showing a state in which a jig is inserted into the battery module in FIG. 11.
FIG. 13 is an enlarged view of region P in FIG. 12.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Parts that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a part is referred to as "including" a certain component, it means that it can further include other components, without excluding the other components, unless otherwise stated.

Further, throughout the specification, when referred to as "planar", it means when a target portion is viewed from the top, and when referred to as "cross-sectional", it means when a target portion is viewed from the side of a cross section cut vertically.

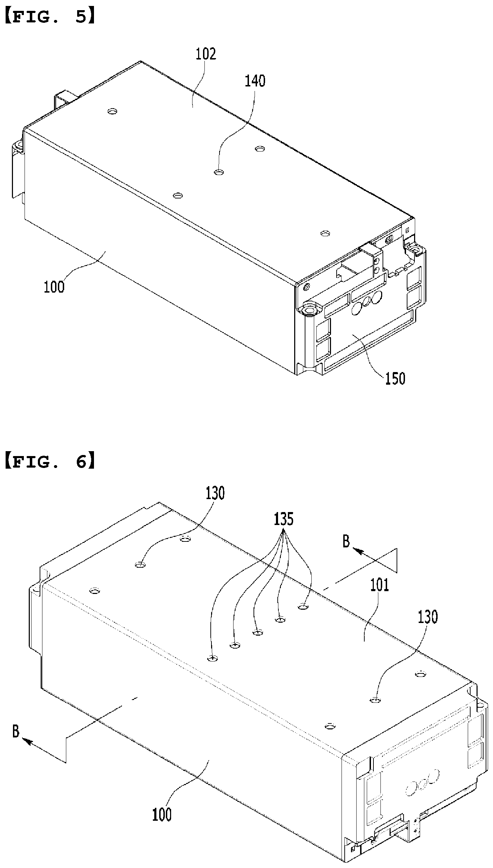

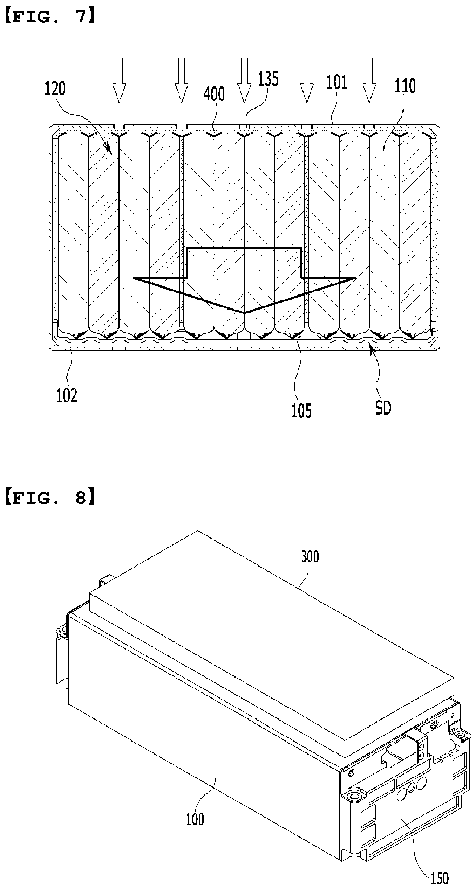

FIG. 4 is an exploded perspective view showing a battery module according to one embodiment of the present disclosure. FIG. 5 is a view showing a state in which the battery module components of FIG. 4 are coupled. FIG. 6 is a perspective view showing a state in which the battery module of FIG. 5 is turned upside down. FIG. 7 is a cross-sectional view taken along line B-B of FIG. 6.

Referring to FIGS. 4 and 5, a battery module according to the present embodiment comprises a battery cell stack 120 in which a plurality of battery cells 110 are stacked, and a frame member 100 accommodating the battery cell stack 120 and having a lower surface 101 and an upper surface 102 corresponding to each other, wherein an injection hole 135 for injecting a thermally conductive resin, and/or a checking hole 130 for detecting a flow of the thermally conductive resin injected into the injection hole 135 are formed in the lower surface 101 of the frame member 100. When the thermally conductive resin is observed from the checking hole 130, injection of the thermally conductive resin may be completed by stopping the injection. According to the present embodiment, an insertion hole 140 through which a protrusion of a supporting jig passes is formed in the upper surface 102 of the frame member 100. A plurality of insertion holes 140 are formed, and the plurality of formed insertion holes 140 may be formed at both ends along a central portion and a longitudinal direction of the upper surface 102 of the frame member 100. Here, the longitudinal direction may be identical to a direction in which the battery cell stack 120 is inserted into the frame member 100.

The frame member 100 according to the present embodiment surrounds the remaining outer surfaces excluding the front and rear surfaces of the battery cell stack 120, and an end plate 150 is positioned on each of the front and rear surfaces of the battery cell stack 120. A busbar frame 145 is positioned between the battery cell stack 120 and the end plate 150. The remaining outer surfaces excluding the front and rear surfaces of the battery cell stack 120 may be upper, lower, left and right surfaces of the battery cell stack.

A thermally conductive resin layer 400 is positioned between the lower surface 101 of the frame member 100 and the battery cell stack 120 according to the present embodiment. The thermally conductive resin layer 400 may be formed by curing the thermally conductive resin injected through the injection hole 135, and may serve to transfer heat generated from the battery cell stack 120 to the outside of the battery module and to fix the battery cell stack 120 in the battery module. The thermally conductive resin layer 400 is formed of a thermally conductive material so as to discharge heat generated from the battery cell stack 120 to the outside, and may include silicone, urethane, epoxy, or the like.

Referring to FIGS. 6 and 7, the battery module according to the present embodiment may further include an insulating cover 105 positioned between the upper surface 102 of the frame member 100 and the battery cell stack 120. The insulating cover 105 may be formed of an injection molded plastic material. A protrusion of a supporting jig, which will be described later, may pass through the insertion hole 140 to support so that the insulating cover 105 and the battery cell stack 120 supported by the insulating cover 105 do not move. In this case, a separation space SD may be formed between the upper surface 102 of the frame member 100 and the insulating cover 105 in the battery module according to the present embodiment.

In the following, a method of manufacturing a battery module according to another embodiment of the present disclosure will be described with reference to FIGS. 8 to 13.

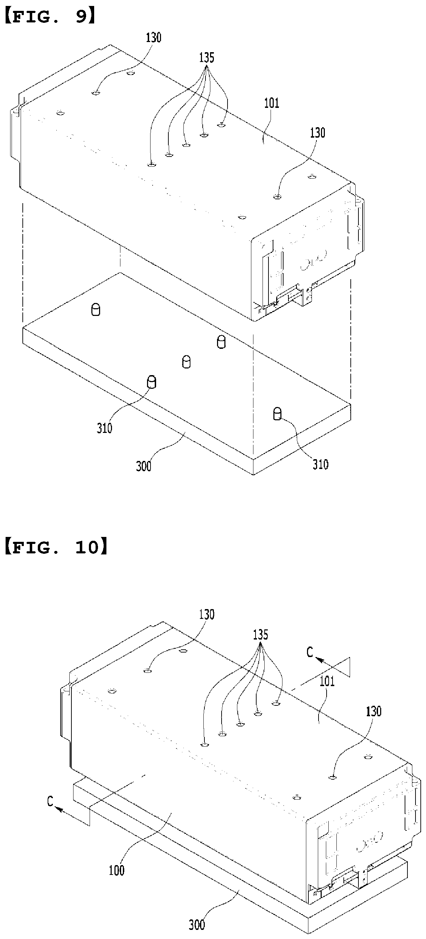

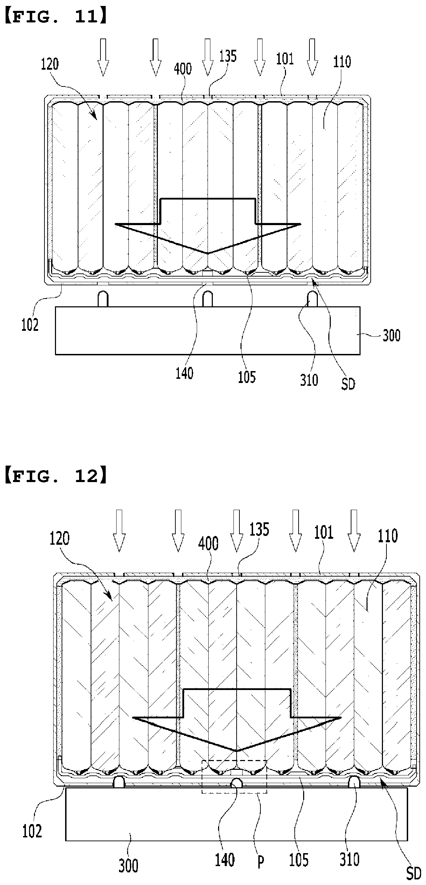

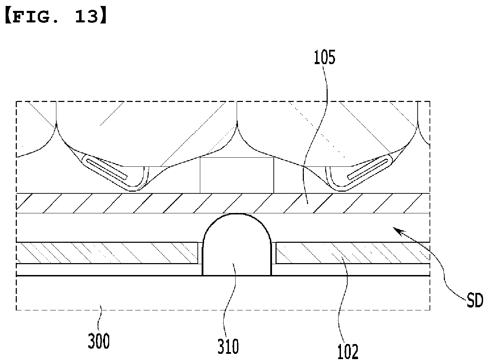

FIG. 8 is a view showing a state in which a jig according to the present embodiment is coupled to an upper end of the battery module. FIG. 9 is a view showing a state before a supporting jig is coupled to the battery module in FIG. 8. FIG. 10 is a view showing a state in which the battery module of FIG. 8 is turned upside down. FIG. 11 is a view showing a state in which a supporting jig is separated in a cross-sectional view taken along line C-C of FIG. 10. FIG. 12 is a cross-sectional view showing a state in which a jig is inserted into the battery module in FIG. 11. FIG. 13 is an enlarged view of region P in FIG. 12.

First, referring to the contents shown in FIG. 4, a method of manufacturing a battery module according to the present embodiment comprises the step of inserting the battery cell stack 120 into the frame member 100 so as to accommodate the battery cell stack 120 in which a plurality of battery cells 110 are stacked. As shown in FIG. 5, an insertion hole 140 is formed in an upper surface 102 of the frame member 100 unlike a conventional battery module, and the insertion hole 140 is used not for injecting a thermally conductive resin, but for inserting a protrusion 310 of a supporting jig 300 shown in FIGS. 8 to 10.

Next, referring to FIG. 8, the method of manufacturing a battery module according to the present embodiment comprises a step of mounting a supporting jig 300 on an upper surface of the frame member 100 of the battery module. The supporting jig 300 may be formed of a plastic material. FIG. 9 shows a state in which the battery module is turned upside down to show a state before the supporting jig is coupled to the battery module. Referring to FIGS. 9 and 11, the supporting jig 300 according to the present embodiment is formed to have a support surface for supporting the battery module, and at least one protrusion 310 protruding toward the battery module from the support surface. The at least one protrusion 310 is positioned so as to correspond to the insertion hole 140 formed in the upper surface 102 of the frame member 100. A diameter of the protrusion 310 may be equal to or smaller than a diameter of the insertion hole 140. A height of the protrusion 310 is greater than a gap of a space between the battery cell stack 120 and the upper surface 102 of the frame member 100 before an assembly of the frame member 100 and the support jig 300 is turned over.

Next, referring to FIG. 10, the method of manufacturing a battery module according to the present embodiment comprises a step of injecting a thermally conductive resin through an injection hole 135 formed in a lower surface 101 of the frame member 100, in a state in which the supporting jig 300 is mounted on the upper surface of the frame member 100 and the battery module is turned upside down. When the thermally conductive resin is injected through the injection hole 135, the supporting jig 300 is supporting the battery module at the lower end of the battery module in a direction in which gravity acts (a downward direction in FIG. 10). Specifically, as shown in FIG. 12, since the protrusion 310 of the supporting jig 300 supports a component inside the battery module, the component does not move downward due to gravity. Therefore, a certain amount of the thermally conductive resin can be injected in a state in which a space between the lower surface 101 of the frame member 100 and the battery cell stack 120 is not increased but is maintained. Here, the component which can be moved by gravity may include the battery cell stack 120 and an insulating cover 105 positioned between the battery cell stack 120 and the frame member 100. For example, referring to FIG. 13, the protrusion 310 of the supporting jig 300 can support the insulating cover 105 in a direction opposite to gravity, thereby minimizing the movement of the insulating cover 105 and the battery cell stack 120 by gravity.

Subsequently, although not shown, the method of manufacturing a battery module according to the present embodiment may further comprise a step of disassembling the supporting jig from the frame member after the step of injecting the thermally conductive resin. The step of disassembling the supporting jig from the frame member may be performed in a state in which the frame member is again turned upside down to its original state. By this process, a separation space SD can be maintained between the insulating cover 105 and the upper surface 102 of the frame member as shown in FIG. 13.

Meanwhile, one or more of the battery modules according to an embodiment of the present disclosure may be packaged in a pack case to form a battery pack.

The above-mentioned battery module and a battery pack including the same may be applied to various devices. These devices may be applied to vehicles such as an electric bicycle, an electric vehicle, a hybrid vehicle, but the present disclosure is not limited thereto and can be applied to various devices that can use the battery module and the battery pack including the same, which also belongs to the scope of the present disclosure.

Although the preferred embodiments of the present disclosure have been described in detail above, the scope of the present disclosure is not limited thereto, and various modifications and improvements of those skilled in the art using the basic concepts of the present disclosure defined in the following claims also belong to the scope of rights.

### [DESCRIPTION OF REFERENCE NUMERALS]

- 100:: frame member
- 105:: insulation cover
- 120:: battery cell stack
- 135:: injection hole
- 140:: insertion hole
- 300:: supporting jig
- 310:: protrusion
- 400:: thermally conductive resin layer

## Claims

1. A battery module comprising:
a battery cell stack (120) in which a plurality of battery cells (110) are stacked, and
a frame member (100) accommodating the battery cell stack (120) and having an upper surface (102) and a lower surface (101) corresponding to each other,
wherein an injection hole (135) for injecting a thermally conductive resin is formed in the lower surface (101) of the frame member (100), and
wherein an insertion hole (140) through which a protrusion (310) of a supporting jig (300) passes is formed in the upper surface (102) of the frame member (100).

2. The battery module of claim 1, further comprising a thermally conductive resin layer (400) positioned between the lower surface (101) of the frame member (100) and the battery cell stack (120).

3. The battery module of claim 2, further comprising an insulating cover (105) positioned between the upper surface (102) of the frame member (100) and the battery cell stack (120).

4. The battery module of claim 3, wherein a separation space (SD) is formed between the upper surface (102) of the frame member (100) and the insulating cover (105) by a distance from a point where the protrusion (310) of the supporting jig (300) passes through the insertion hole (140) to a surface supporting the battery cell stack (120).

5. The battery module of claim 1, wherein a plurality of the insertion holes (140) are formed, and the plurality of insertion holes (140) are formed at both ends along a central portion and a longitudinal direction of the upper surface (102) of the frame member (100).

6. The battery module of claim 1, further comprising a busbar frame (145) covering front and rear surfaces of the frame member (100),
wherein the frame member (100) surrounds upper, lower, left and right surfaces of the battery cell stack (120).

7. The battery module of claim 1, wherein the upper (102) and the lower (101) surfaces of the frame member (100) face each other along a direction perpendicular to a stacking direction of the battery cell stack (120).

8. A method of manufacturing a battery module, comprising the steps of:
accommodating a battery cell stack (120) in which a plurality of battery cells (110) are stacked in a frame member (100),
mounting a supporting jig (300) on an upper surface (102) of the frame member (100), and
injecting a thermally conductive resin through an injection hole (135) formed in a lower surface (101) of the frame member (100),
wherein in the step of injecting the thermally conductive resin, the supporting jig (300) supports a component inside the frame member (100) so that the component does not flow.

9. The method of manufacturing a battery module according to claim 8, wherein the supporting jig (300) includes at least one protrusion (310) so as to be inserted into an insertion hole (140) formed in an upper surface (102) of the frame member (100).

10. The method of manufacturing a battery module according to claim 9, wherein the method further comprises the step of disassembling the supporting jig (300) from the frame member (100) after the step of injecting the thermally conductive resin.

11. The method of manufacturing a battery module according to claim 10, wherein the step of injecting the thermally conductive resin through the injection hole (135) formed in the lower surface (101) of the frame member (100) is performed in a state in which the frame member (100) is turned upside down, and
the step of disassembling the supporting jig (300) from the frame member (100) is performed in a state in which the frame member (100) is again turned upside down to its original state.

12. The method of manufacturing a battery module according to claim 9, wherein the supporting jig (300) is formed of a plastic material.

13. The method of manufacturing a battery module according to claim 8, wherein the method further comprises the step of forming an insulating cover (105) between the upper surface (102) of the frame member (100) and the battery cell stack (120).

14. The method of manufacturing a battery module according to claim 13, wherein the component includes the battery cell stack (120) and the insulating cover (105).

15. A battery pack comprising the battery module of claim 1.

## Patentansprüche

1. Batteriemodul, umfassend:
einen Batteriezellenstapel (120), in welchem eine Mehrzahl von Batteriezellen (110) gestapelt sind, und
ein Rahmenelement (100), welches den Batteriezellenstapel (120) aufnimmt und eine obere Fläche (102) und eine untere Fläche (101) aufweist, welche einander entsprechen,
wobei ein Injektionsloch (135) zum Injizieren eines thermisch leitfähigen Harzes in der unteren Fläche (101) des Rahmenelements (100) gebildet ist, und
wobei ein Einsatzloch (140), durch welches ein Vorsprung (310) einer Halterungsvorrichtung (300) verläuft, in der oberen Fläche (102) des Rahmenelements (100) gebildet ist.

2. Batteriemodul nach Anspruch 1, ferner umfassend eine Schicht (400) eines thermisch leitfähigen Harzes, welche zwischen der unteren Fläche (101) des Rahmenelements (100) und dem Batteriezellenstapel (120) positioniert ist.

3. Batteriemodul nach Anspruch 2, ferner umfassend eine Isolierabdeckung (105), welche zwischen der oberen Fläche (102) des Rahmenelements (100) und dem Batteriezellenstapel (120) positioniert ist.

4. Batteriemodul nach Anspruch 3, wobei ein Separationsraum (SD) zwischen der oberen Fläche (102) des Rahmenelements (100) und der Isolierabdeckung (105) durch einen Abstand von einer Stelle, an welcher der Vorsprung (310) der Halterungsvorrichtung (300) durch das Einsatzloch (140) hindurch verläuft, zu einer Fläche gebildet ist, welche den Batteriezellenstapel (120) haltert.

5. Batteriemodul nach Anspruch 1, wobei eine Mehrzahl der Einsatzlöcher (140) gebildet ist, und die Mehrzahl von Einsatzlöchern (140) an beiden Enden entlang eines zentralen Abschnitts und einer longitudinalen Richtung der oberen Fläche (102) des Rahmenelements (100) gebildet sind.

6. Batteriemodul nach Anspruch 1, ferner umfassend einen Sammelschienenrahmen (145), welcher eine vordere und eine hintere Fläche des Rahmenelements (100) abdeckt,
wobei das Rahmenelement (100) eine obere, eine untere, eine linke und eine rechte Fläche des Batteriezellenstapels (120) umgibt.

7. Batteriemodul nach Anspruch 1, wobei die obere (102) und die untere (101) Fläche des Rahmenelements (100) einander entlang einer Richtung zugewandt sind, welche senkrecht zu einer Stapelrichtung des Batteriezellenstapels (120) ist.

8. Verfahren zur Herstellung eines Batteriemoduls, umfassend die folgenden Schritte:
Aufnehmen eines Batteriezellenstapels (120), in welchem eine Mehrzahl von Batteriezellen (110) gestapelt sind, in einem Rahmenelement (100),
Montieren einer Halterungsvorrichtung (300) an einer oberen Fläche (102) des Rahmenelements (100), und
Injizieren eines thermisch leitfähigen Harzes durch ein Injektionsloch (135), welches in einer unteren Fläche (101) des Rahmenelements (100) gebildet ist,
wobei in dem Schritt eines Injizierens des thermisch leitfähigen Harzes, die Halterungsvorrichtung (300) eine Komponente innerhalb des Rahmenelements (100) haltert, so dass die Komponente nicht fließt.

9. Verfahren zum Herstellen eines Batteriemoduls nach Anspruch 8, wobei die Halterungsvorrichtung (300) wenigstens einen Vorsprung (310) umfasst, um in wenigstens ein Einsatzloch (140) eingesetzt zu werden, welches in einer oberen Fläche (102) des Rahmenelements (100) gebildet ist.

10. Verfahren zur Herstellung eines Batteriemoduls nach Anspruch 9, wobei das Verfahren ferner den Schritt eines Demontierens der Halterungsvorrichtung (300) von dem Rahmenelement (100) nach dem Schritt eines Injizierens des thermisch leitfähigen Harzes umfasst.

11. Verfahren zur Herstellung eines Batteriemoduls nach Anspruch 10, wobei der Schritt eines Injizierens des thermisch leitfähigen Harzes durch das Injektionsloch (135), welches in der unteren Fläche (101) des Rahmenelements (100) gebildet ist, in einem Zustand durchgeführt wird, in welchem das Rahmenelement (100) umgedreht ist, und
der Schritt des Demontierens der Halterungsvorrichtung (300) von dem Rahmenelement (100) in einem Zustand durchgeführt wird, in welchem das Rahmenelement (100) erneut in seinen originalen Zustand umgedreht ist.

12. Verfahren zur Herstellung eines Batteriemoduls nach Anspruch 9, wobei die Halterungsvorrichtung (300) aus einem Kunststoffmaterial gebildet ist.

13. Verfahren zur Herstellung eines Batteriemoduls nach Anspruch 8, wobei das Verfahren ferner den Schritt eines Bildens einer Isolierabdeckung (105) zwischen der oberen Fläche (102) des Rahmenelements (100) und dem Batteriezellenstapel (120) umfasst.

14. Verfahren zur Herstellung eines Batteriemoduls nach Anspruch 13, wobei die Komponente den Batteriezellenstapel (120) und die Isolierabdeckung (105) umfasst.

15. Batteriepack, umfassend das Batteriemodul nach Anspruch 1.

## Revendications

1. Module de batterie comprenant :
un empilement d'éléments de batterie (120) dans lequel une pluralité d'éléments de batterie (110) sont empilés, et
un élément de cadre (100) recevant l'empilement d'éléments de batterie (120) et ayant une surface supérieure (102) et une surface inférieure (101) correspondant l'une à l'autre,
dans lequel un trou d'injection (135) pour l'injection d'une résine thermoconductrice est formé dans la surface inférieure (101) de l'élément de cadre (100), et
dans lequel un trou d'insertion (140) à travers lequel une saillie (310) d'un gabarit de support (300) passe est formé dans la surface supérieure (102) de l'élément de cadre (100).

2. Module de batterie selon la revendication 1, comprenant en outre une couche de résine thermoconductrice (400) positionnée entre la surface inférieure (101) de l'élément de cadre (100) et l'empilement d'éléments de batterie (120).

3. Module de batterie selon la revendication 2, comprenant en outre un couvercle isolant (105) positionné entre la surface supérieure (102) de l'élément de cadre (100) et l'empilement d'éléments de batterie (120).

4. Module de batterie selon la revendication 3, dans lequel un espace de séparation (SD) est formé entre la surface supérieure (102) de l'élément de cadre (100) et le couvercle isolant (105) d'une distance d'un point où la saillie (310) du gabarit de support (300) passe à travers le trou d'insertion (140) à une surface supportant l'empilement d'éléments de batterie (120).

5. Module de batterie selon la revendication 1, dans lequel une pluralité des trous d'insertion (140) sont formés, et la pluralité de trous d'insertion (140) sont formés au niveau des deux extrémités le long d'une portion centrale et une direction longitudinale de la surface supérieure (102) de l'élément de cadre (100).

6. Module de batterie selon la revendication 1, comprenant en outre un cadre de barre omnibus (145) recouvrant les surfaces avant et arrière de l'élément de cadre (100), dans lequel l'élément de cadre (100) entoure les surfaces supérieure, inférieure, gauche et droite de l'empilement d'éléments de batterie (120).

7. Module de batterie selon la revendication 1, dans lequel les surfaces supérieure (102) et inférieure (101) de l'élément de cadre (100) sont face l'une à l'autre le long d'une direction perpendiculaire à une direction d'empilement de l'empilement d'éléments de batterie (120).

8. Procédé de fabrication d'un module de batterie, comprenant les étapes de :
réception d'un empilement d'éléments de batterie (120) dans lequel une pluralité d'éléments de batterie (110) sont empilés dans un élément de cadre (100),
montage d'un gabarit de support (300) sur une surface supérieure (102) de l'élément de cadre (100), et
injection d'une résine thermoconductrice à travers un trou d'injection (135) formé dans une surface inférieure (101) de l'élément de cadre (100),
dans lequel dans l'étape d'injection de la résine thermoconductrice, le gabarit de support (300) supporte un composant à l'intérieur de l'élément de cadre (100) de sorte que le composant ne s'écoule pas.

9. Procédé de fabrication d'un module de batterie selon la revendication 8, dans lequel le gabarit de support (300) comporte au moins une saillie (310) de façon à être inséré dans un trou d'insertion (140) formé dans une surface supérieure (102) de l'élément de cadre (100).

10. Procédé de fabrication d'un module de batterie selon la revendication 9, dans lequel le procédé comprend en outre l'étape de désassemblage du gabarit de support (300) de l'élément de cadre (100) après l'étape d'injection de la résine thermoconductrice.

11. Procédé de fabrication d'un module de batterie selon la revendication 10, dans lequel l'étape d'injection de la résine thermoconductrice à travers le trou d'injection (135) formé dans la surface inférieure (101) de l'élément de cadre (100) est réalisée dans un état dans lequel l'élément de cadre (100) est tourné vers le bas, et l'étape de désassemblage du gabarit de support (300) de l'élément de cadre (100) est réalisée dans un état dans lequel l'élément de cadre (100) est à nouveau tourné vers le bas par rapport à son état d'origine.

12. Procédé de fabrication d'un module de batterie selon la revendication 9, dans lequel le gabarit de support (300) est formé d'un matériau plastique.

13. Procédé de fabrication d'un module de batterie selon la revendication 8, dans lequel le procédé comprend en outre l'étape de formation d'un couvercle isolant (105) entre la surface supérieure (102) de l'élément de cadre (100) et l'empilement d'éléments de batterie (120).

14. Procédé de fabrication d'un module de batterie selon la revendication 13, dans lequel le composant comporte l'empilement d'éléments de batterie (120) et le couvercle isolant (105).

15. Bloc-batterie comprenant le module de batterie selon la revendication 1.
